# EUROPÄISCHE PATENTSCHRIFT

(11) **EP 2 055 970 B1**
(45) Veröffentlichungstag und Bekanntmachung des Hinweises auf die Patenterteilung: **23.11.2011**
(21) Anmeldenummer: 08105580.8
(22) Anmeldetag: 15.10.2008
(51) Int. Cl.: F16B 33/06, F16B 25/00

(54) **Schraube**
Screw
Vis

(30) Priorität: 31.10.2007 DE 102007000605
(43) Veröffentlichungstag der Anmeldung: 06.05.2009
(73) Patentinhaber: HILTI Aktiengesellschaft, 9494 Schaan (LI)
(72) Erfinder: Gahn, Jürgen, 9450 Altstätten (CH); Vorhauer, Andreas, 6832 Sulz (AT)
(74) Vertreter: Söllner, Oliver

(56) Entgegenhaltungen:
- EP-A1- 1 655 498
- WO-A1-2004/074697

## Beschreibung

Die Erfindung betrifft eine Schraube gemäss Anspruch 1 mit einem Schaft, der eine radiale Schaftaussenseite und einen freien Endbereich aufweist, und mit zumindest einem wenigstens bereichsweise umfänglich an dem Schaft angeordneten Gewinde, das eine radiale Aussenkontur, zwei seitliche Flanken und einen Gewindeanfang im freien Endbereich des Schafts aufweist, wobei in dem Gewinde radial nach aussen hin offene Aussparungen mit jeweils einer entlang des verlaufs des Gewindes dem Gewindeanfang zugewandten, ersten Begrenzungswand und mit einer entlang des verlaufs des Gewindes dem Gewindeanfang abgewandten, zweiten Begrenzungswand vorgesehen sind, und in den Aussparungen Schneidkörper aus einem Werkstoff vorgesehen sind, dessen Härte grösser als die Härte des Gewindes ist, wobei die Schneidkörper eine Längsachse und eine die Längsachse in einem Abstand umgebende Mantelfläche aufweisen, und wobei jede Aussparung einen flächigen Auflageabschnitt zur bereichsweisen Aufnahme der Mantelfläche des Schneidkörpers aufweist.

Derartige Schrauben werden direkt in ein zuvor in einem Untergrund erstellten Bohrloch eingeschraubt, wobei das Gewinde der Schraube ein Gegengewinde beziehungsweise einen Hinterschnitt in den Untergrund furcht beziehungsweise schneidet.

Für Aussenanwendungen werden die Schrauben, wie Betonschrauben, vorteilhaft aus einem korrosionsbeständigen Material, beispielsweise aus korrosionsbeständigen Stahlwerkstoffen hergestellt. Derartige Materialien weisen jedoch oftmals eine Härte auf, die für ein Furchen eines mineralischen Untergrundes nicht ausreicht, so dass das Gewinde der Schraube beim Einschrauben verschleisst. Eine Härtung der Schraube oder des z. B. einstückig mit dem Schaft ausgebildeten Gewindes ist bei korrosionsbeständigen Materialien nur bedingt möglich.

Aus der DE 198 52 338 A1 ist eine Schraube aus rostfreiem Stahl bekannt, dessen Schaft und Gewinde mit nach aussen offenen, radial zur Längsachse der Schraube verlaufenden Aufnahmebohrungen als Aussparungen zur Aufnahme von Schneidkörpem in Form von zylindrischen Schneideinsatz-Stiften aus gehärtetem Stahl versehen ist, die das Einschneiden in einen harten, mineralischen Untergrund, wie beispielsweise Beton oder Mauerwerk erleichtern. Die Aussparungen weisen im Gewinde jeweils eine dem Gewindeanfang zugewandte, erste Begrenzungswand und eine dem Gewindeanfang abgewandte, zweite Begrenzungswand auf, wobei die Begrenzungswände jeweils eine Kontur zur bereichsweisen Aufnahme der Mantelfläche der im Querschnitt kreisrunden Schneideinsatz-Stifte aufweisen. Die Schneideinsatz-Stifte sind in Einschraubrichtung formschlüssig und in radialer Richtung reibschlüssig in den Aufnahmebohrungen im Schaft gehalten.

Nachteilig an der bekannten Lösung ist, dass alle Schneideinsatz-Stifte jeweils im gleichen Mass die Querschnitt-Projektionsfläche des Gewindes radial überragen und die Fertigung dieser Schraube sehr aufwendig ist, da die Vielzahl von Schneideinsatz-Stiften einzeln in die Aufnahmebohrungen eingeschlagen und anschliessend nachbearbeitet werden müssen. Des Weiteren ist ein hohes Eindrehmoment erforderlich, um derartige gewindefurchenden Schrauben, insbesondere mit kleinerem Durchmesser, zu setzen.

Die EP 1 655 498 A1 betrifft eine gewindefurchende Schraube mit einem Schaft und einem umfänglich an diesem angeordneten Gewinde, wobei mehrere Schneidmittel in Aussparungen im Gewinde angeordnet sind, deren Härte grösser als die Härte des Gewindes ist, wobei die Schneidmittel als in den Aussparungen angeordnetes Schweissgut ausgebildet sind.

Aus der W02004/074697A geht eine gewindeschneidende Schraube mit einem im Wesentlichen zylindrischen Kern aus Metall, einem einstückig mit dem Kern ausgebildeten Gewinde und mindestens einem im Gewinde angeordneten Schneidelement hervor. Das Schneidelement kann dabei im Querschnitt quer zur Längsachse des zylindrischen Kerns etwa wannenförmig ausgebildet sein.

Aufgabe der Erfindung ist es, eine gewindefurchende Schraube zu schaffen, die das Setzen der Schraube in harten Untergründen, wie z. B. Beton, verbessert und die einfach zu fertigen ist.

Die Aufgabe ist durch die Merkmale des unabhängigen Anspruchs gelöst. Vorteilhafte Weiterbildungen sind in den Unteransprüchen dargelegt.

Die Erfindung ist dadurch gekennzeichnet, dass der flächige Auflageabschnitt wannenförmig mit entlang des Verlaufes des Gewindes gerichteten Mantellinien ist.

Die Schneidkörper, die vorteilhaft aus einem Hartmetall gefertigt sind, werden in die Aussparungen eingesetzt, wobei sich die Schneidkörper einfach in den Aussparungen positionierbar und damit einfach im Gewinde festlegbar sind. Die Ausgestaltung des Auflageabschnitts ermöglicht eine formnahe, bereichsweise Ummantelung des festzulegenden Schneidkörpers und somit eine vorteilhafte Verankerung des Schneidkörpers im Gewinde.

Der Fertigungsprozess der erfindungsgemässen Schraube ist nicht nur einfach sondern auch stabil, so dass keine kleinen Toleranzfelder nötig sind, was eine wirtschaftliche Fertigung der Schraube gewährleistet. Mit der Ausgestaltung der Aussparungen werden die Anzahl der verwendbaren Verfahren zur Festlegung der Schneidkörper in den Aussparungen massgeblich erhöht. Beispielsweise sind die Schneidkörper mit einem Schweissverfahren, insbesondere mit einem Widerstandsschweissverfahren, festlegbar. Zudem reicht eine geringe Einbettung des Schneidkörpers im Gewinde für eine ausreichende Verankerung des Schneidkörpers im Gewinde zum Furchen des Untergrundes aus. Obwohl die Schneidkörper nicht im Kerndurchmesser des Schafts verankert sind, brechen und fallen weniger oder keine Schneidkörper beim Einschraubvorgang aus, so dass im Wesentlichen alle in dem Gewinde eingesetzten Schneidkörpem für den gesamten Gewindefurchvorgang zur Verfügung stehen.

Der Auflageabschnitt ist vorteilhaft geneigt zur Schaftaussenseite angeordnet, wobei die von dem Auflageabschnitt aufgespannte Ebene mit der radialen Aussenkontur und/oder einer der seitlichen Flanken des Gewindes vorteilhaft einen Winkel von vorteilhaft -35° bis +35° einschliesst.

Erfindungsgemäss ist der flächige Auflageabschnitt wannenförmig mit entlang des Verlaufes des Gewindes gerichteten Mantellinien. Die Schneidkörper werden durch die Ausgestaltung des wannenförmigen Auflageabschnitts bereits beim Einsetzen selbst in den Aussparungen positionieren und damit einfach im Gewinde festlegen lassen. Der wannenförmige Auflageabschnitt ist vorteilhaft komplementär zu der Kontur der Mantelfläche des einzusetzenden Schneidkörpers ausgebildet, die mit dem wannenförmigen Auflageabschnitt in Anlage kommt. Die Ausgestaltung des Auflageabschnitts ermöglicht eine formnahe, bereichsweise Ummantelung des festzulegenden Schneidkörpers und somit eine vorteilhafte Verankerung des Schneidkörpers im Gewinde.

Bevorzugt liegt der Schneidkörper an einer der Begrenzungswände der Aussparung an, womit zur Festlegung des Schneidkörpers im Gewinde mehr Kontaktfläche zwischen dem Schneidkörper und dem Gewinde zur Verfügung steht. In dieser Ausführungsform ist der Schneidkörper vorteilhaft zu der anderen Begrenzungswand der Aussparung beabstandet, wobei der verbleibende Raum in der Aussparung einen Spanraum z. B. zur Aufnahme von Bohrmehl ausbildet. Der Spanraum ermöglicht den Böhrmehltransport in Richtung des Schafts, ohne das Einschraubmoment massgeblich zu erhöhen. Mineralische Untergründe wie Beton weisen Bewehrungseisen auf, die gegebenenfalls im Bereich des Bohrlochs liegen. In dem Spanraum kann auch Spangut im Fall eines Bewehrungseisentreffers aufgenommen werden. Der Spanraum ermöglicht einen vorteilhaften Bohrmehltransport insbesondere in den unterschiedlichsten mineralischen Untergründen. Vorteilhaft weist der Spanraum ein Spanraumvolumen auf, dass dem 0.1-fachen bis 5.0-fachen des Schneidkörpervolumens des Schneidkörpers entspricht. Weiter vorteilhaft ist der minimale Abstand des Spanraums zur Schaftaussenseite kleiner als der minimale Abstand des Auflagerabschnitts der Aussparung zur Schaftaussenseite. Besonders vorteilhaft reicht der Spanraum bis an den oder in den Schaft, womit der Abtransport des anfallenden Bohrmehls in Richtung des Schafts in vorteilhafter Weise gewährleistet ist.

Vorzugsweise ist zwischen dem wannenförmigen Auflageabschnitt und einer der Begrenzungswände der Aussparung ein Freiraum vorgesehen, der die Positionierung des Schneidkörpers wesentlich vereinfacht. Der Freiraum verhindert bei der Ausbildung der Aussparung in diesem Bereich Absätze oder Vorsprünge, welche eine flächige Anlage des Schneidkörpers an dem Anlageabschnitt behindern. Insbesondere wenn der Schneidkörper nicht nur an dem Anlageabschnitt sondern auch an einer der Begrenzungswand der Aussparung anliegt, ist das Vorsehen eines Freiraums zwischen diesen Bereichen der Aussparung für eine einwandfreie Positionierung und Festlegung des Schneidkörpers in der Aussparung vorteilhaft.

ist beim Übergang einer der Begrenzungswände der Aussparung zur radialen Aussenkontur des Gewindes eine Fase vorgesehen, was eine korrekte Positionierung des Schneidkörpers in der Aussparung auch in diesem Bereich sicherstellt. Vorteilhaft ist diese Fase an der Begrenzungswand vorgesehen, an welcher der Schneidkörper anliegt. Insbesondere bei einer schweisstechnischen Festlegung des Schneidkörpers verhindert die Fase die Übertragung von Wärme im Bereich der radialen Aussenkontur des Gewindes, in dem nur wenig Material des Gewindes vorhanden ist und sich dieses bei einer zu grossen Wärmezufuhr in einem unerwünschten Mass verwerfen könnte.

Vorzugsweise weist der Auflageabschnitt eine dem freien Endbereich des Schafts zugewandte Anschlagkante auf, die von der Schaftaussenseite abragt, was eine einfache Positionierung des in die Aussparung eingesetzten Schneidkörpers ermöglicht. Zudem steht eine grössere Kontaktfläche des Auflageabschnitts mit dem Schneidkörper zu dessen Festlegung im Gewinde zur Verfügung. Die dem freien Endbereich des Schafts zugewandte Anschlagkante erstreckt sich ausgehend von der Schaftaussenseite über eine gewisse Höhe in Richtung der radialen Aussenkontur des Gewindes.

Bevorzugt weist der Auflageabschnitt eine dem freien Endbereich des Schafts abgewandte Anschlagkante auf, die von der Schaftaussenseite abragt, was eine einfache Positionierung des in die Aussparung eingesetzten Schneidkörpers ermöglicht. Zudem steht eine grössere Kontaktfläche des Auflageabschnitts mit dem Schneidkörper zu dessen Festlegung im Gewinde zur Verfügung. Die dem freien Endbereich des Schafts abgewandte Anschlagkante erstreckt sich ausgehend von der Schaftaussenseite ebenfalls über eine gewisse Höhe in Richtung der radialen Aussenkontur des Gewindes.

Vorzugsweise ist die Höhe der dem freien Endbereich des Schafts zugewandten Anschlagkante ausgehend von der Schaftaussenseite grösser als die entsprechende Höhe der dem freien Endbereich des Schafts abgewandten Anschlagkante, was die Positionierung des in die Aussparung eingesetzten Schneidkörpers weiter verbessert.

Die Erfindung wird nachstehend anhand eines Ausführungsbeispiels näher erläutert. Es zeigen:
- Fig. 1: Eine Schraube in Seitenansicht;
- Fig. 2: einen schematischen Längsschnitt durch das Gewinde und einen Schneidkörper in vergrösserter Darstellung gem. der Linie II-II in Fig. 1; und
- Fig. 3: einen Querschnitt durch einen Schneidkörper entlang der Linie III-III in Fig. 2.
Grundsätzlich sind in den Figuren gleiche Teile mit den gleichen Bezugszeichen versehen.

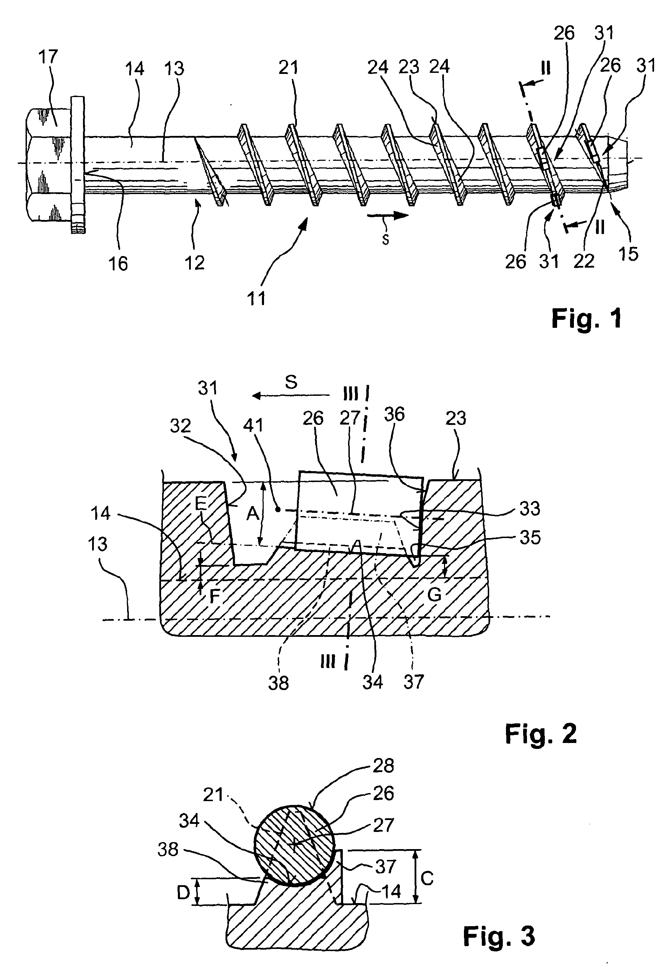

Die in den Figuren 1 bis 3 dargestellte Schraube 11 weist einen Schaft 12 und ein einstückig mit dem Schaft 12 ausgebildetes, wenigstens bereichsweise umfänglich an diesem angeordnetes Gewinde 21 auf.

Der Schaft 12 erstreckt sich entlang einer Längsachse 13 der Schraube 11 und weist eine radiale Schaftaussenseite 14 sowie einen freien Endbereich 15 auf. Am gegenüberliegenden Ende 16 des Schafts 12 ist ein Sechskant-Schraubenkopf als Drehangriffsmittel 17 vorgesehen. Der Pfeil S zeigt in den Figuren 1 und 2 jeweils die Einschraubrichtung der Schraube 11 an.

Das Gewinde 21 weist im freien Endbereich 15 des Schafts 12 einen Gewindeanfang 22, eine radiale Aussenkontur 23 und zwei seitliche Flanken 24 auf. In dem Gewinde 21 sind radial nach aussen hin offene Aussparungen 31 vorgesehen, die jeweils eine dem Gewindeanfang 22 zugewandte, erste Begrenzungswand 32, eine dem Gewindeanfang 22 abgewandte, zweite Begrenzungswand 33 und einen wannenförmigen Auflageabschnitt 34 mit im Wesentlichen entlang des Verlaufes des Gewindes 21 gerichteten Mantellinien zur bereichsweisen Aufnahme der Mantelfläche des Schneidkörpers 26 aufweist. Eine von dem Auflageabschnitt 34 aufgespannte Ebene E schliesst mit der radialen Aussenkontur 23 des Gewindes 21 einen Winkel A von +20° ein.

In den Aussparungen 31 sind Schneidkörper 26 aus einem Werkstoff vorgesehen, dessen Härte grösser als die Härte des Gewindes 21 ist. Die hier zylindrischen Schneidkörper 26 sind im Querschnitt kreisrund und weisen eine Längsachse 27, die im Wesentlichen entlang dem Verlauf des Gewindes 21 ausgerichtet ist, sowie eine die Längsachse 27 in einem Abstand umgebende Mantelfläche 28 auf.

Der Schneidkörper 26 liegt an der dem Gewindeanfang 22 abgewandten, zweiten Begrenzungswand 33 an. Zwischen dem Auflageabschnitt 34 und der dem Gewindeanfang 22 abgewandten, zweiten Begrenzungswand 33 ist ein Freiraum 35 vorgesehen. Beim Übergang der dem Gewindeanfang 22 abgewandten, zweiten Begrenzungswand 33 zur radialen Aussenkontur 23 des Gewindes 21 ist eine Fase 36 vorgesehen.

Der Auflageabschnitt 34 weist eine dem freien Endbereich 15 des Schafts 12 zugewandte, erste seitliche Anschlagkante 37 und eine dem freien Endbereich 15 des Schafts 12 abgewandte, zweite seitliche Anschlagkante 38 auf, die jeweils von der Schaftaussenseite 14 abragen. Die Höhe C der dem freien Endbereich 15 des Schafts 12 zugewandten, ersten seitlichen Anschlagkante 37 ausgehend von der Schaftaussenseite 14 ist grösser als die entsprechende Höhe D der dem freien Endbereich 15 des Schafts 12 abgewandten, zweiten seitlichen Anschlagkante 38.

Zwischen dem Schneidkörper 26 und der dem Gewindeanfang 22 zugewandten, ersten Begrenzungswand 32 der Aussparung 31 ist ein Spanraum 41 vorgesehen. Der Spanraum 41 weist ein Spanraumvolumen auf, das dem 0.3-fachen bis 5.0-fachen des Schneidkörpervolumens des Schneidkörpers entspricht. Der minimale Abstand F des Spanraums 41 zur Schaftaussenseite 14 ist kleiner als der minimale Abstand G des Auflagerabschnitts 34 der Aussparung 31 zur Schaftaussenseite 14.

## Patentansprüche

1. Schraube (11) mit einem Schaft (12), der eine radiale Schaftaussenseite (14) und einen freien Endbereich (15) aufweist, und
mit zumindest einem wenigstens bereichsweise umfänglich an dem Schaft (12) angeordneten Gewinde (21), das eine radiale Aussenkontur (23), zwei seitliche Flanken (24) und einen Gewindeanfang (22) im freien Endbereich (15) des Schafts (12) aufweist, wobei
in dem Gewinde (21) radial nach aussen hin offene Aussparungen (31) mit jeweils einer entlang des Verlaufes des Gewindes (21) dem Gewindeanfang (22) zugewandten, ersten Begrenzungswand (32) und mit einer entlang des Verlaufes des Gewindes (21) dem Gewindeanfang (22) abgewandten, zweiten Begrenzungswand (33) vorgesehen sind, und
in den Aussparungen (31) Schneidkörper (26) aus einem Werkstoff vorgesehen sind, dessen Härte grösser als die Härte des Gewindes (21) ist, wobei
die Schneidkörper (26) eine Längsachse (27) und eine die Längsachse (27) in einem Abstand umgebende Mantelfläche (28) aufweisen,
und wobei jede Aussparung (31) einen flächigen Auflageabschnitt (34) zur bereichsweisen Aufnahme der Mantelfläche des Schneidkörpers (26) aufweist, **dadurch gekennzeichnet, dass**
der flächige Auflageabschnitt (34) wannenförmig mit entlang des Verlaufes des Gewindes (21) gerichteten Mantellinien ist.

2. Schraube nach Anspruch 1, **dadurch gekennzeichnet, dass** der Schneidkörper (26) an einer der Begrenzungswände (33, 34) der Aussparung (31) anliegt.

3. Schraube nach einem der Ansprüche 1 oder 2, **dadurch gekennzeichnet, dass** zwischen dem Auflageabschnitt (34) und einer der Begrenzungswände (33, 34) der Aussparung (31) ein Freiraum (35) vorgesehen ist.

4. Schraube nach einem der Ansprüche 1 bis 3, **dadurch gekennzeichnet, dass** beim Übergang einer der Begrenzungswände (33) der Aussparung (31) zur radialen Aussenkontur (23) des Gewindes (21) eine Fase (36) vorgesehen ist.

5. Schraube nach einem der Ansprüche 1 bis 4, **dadurch gekennzeichnet, dass** der Auflageabschnitt (34) eine dem freien Endbereich (15) des Schafts (12) zugewandte, seitliche Anschlagkante (37) aufweist, die von der Schaftaussenseite (14) abragt.

6. Schraube nach einem der Ansprüche 1 bis 5, **dadurch gekennzeichnet, dass** der Auflageabschnitt (34) eine dem freien Endbereich (15) des Schafts (12) abgewandte, seitliche Anschlagkante (38) aufweist, die von der Schaftaussenseite (14) abragt.

7. Schraube nach Anspruch 5 und 6, **dadurch gekennzeichnet, dass** die Höhe (C) der dem freien Endbereich (15) des Schafts (12) zugewandten, seitlichen Anschlagkante (37) ausgehend von der Schaftaussenseite (14) grösser als die entsprechende Höhe (D) der dem freien Endbereich (15) des Schafts (12) abgewandten, seitlichen Anschlagkante (38) ist.

## Claims

1. Bolt (11) having a shank (12) which has a radial periphery (14) and a free end-region (15), and having at least one thread (21) which is circumferentially arranged on the shank (12) at least in a region or regions and which has a radial external outline (23), two lateral flanks (24) and a start (22) in the free end-region (15) of the shank (12), there being provided in the thread (21) recesses (31) which are open in the radially outward direction and which each have a first boundary wall (32) facing towards the start (22) of the thread along the path of the said thread (21) and a second boundary wall (33) facing away from the start (22) of the thread along the path of the said thread (21), and there being provided in the recesses (31) cutting bodies (26) of a material those hardness is greater than the hardness of the thread (21), the cutting bodies (26) having a longitudinal axis (27), and a circumferential surface (28) which surrounds the longitudinal axis (27) at a distance, and each recess (31) having a supporting portion (34) covering an area to receive a region of the circumferential surface of the cutting body (26), **characterised in that** the supporting portion (34) covering an area is trough-shaped with generatrixes directed along the path of the thread (21).

2. Bolt according to claim 1, **characterised in that** the cutting body (26) rests against one of the boundary walls (33, 34) of the recess (31).

3. Bolt according to either of claims 1 and 2, **characterised in that** a clear space (35) is provided between the supporting portion (34) and one of the boundary walls (33, 34) of the recess (31).

4. Bolt according to one of claims 1 to 3, **characterised in that** a bevel (36) is provided at the transition from one (33) of the boundary walls of the recess (31) to the radial external outline (23) of the thread (21).

5. Bolt according to one of claims 1 to 4, **characterised in that** the supporting portion (34) has a lateral abutment edge (37) adjacent the free end-region (15) of the shank (12), which lateral abutment edge (37) projects from the periphery (14) of the shank.

6. Bolt according to one of claims 1 to 5, **characterised in that** the supporting portion (34) has a lateral abutment edge (38) remote from the free end-region (15) of the shank (12), which lateral abutment edge (38) projects from the periphery (14) of the shank.

7. Bolt according to claims 5 and 6, **characterised in that**, starting from the periphery (14) of the shank, the height (C) of the lateral abutment edge (37) adjacent the free end-region (15) of the shank (12) is greater than the corresponding height (D) of the lateral abutment edge (38) remote from the free end-region (15) of the shank (12).

## Revendications

1. Vis (11) comportant une tige (12) ayant un côté de tige extérieur radial (14) et une zone d'extrémité libre (15), et
au moins un filet (21) agencé de manière circonférentielle sur la tige (12) au moins dans certaines zones, lequel filet a un profil extérieur radial (23), deux flans latéraux (24) et un début de filet (22) dans la zone d'extrémité libre (15) de la tige (12),
dans laquelle des évidements (31) ouverts radialement vers l'extérieur sont prévus dans le filet (21), lesquels évidements comportant respectivement une première paroi de délimitation (32), dirigée vers le début de filet (22) le long de l'étendue du filet (21) et une seconde paroi de délimitation (33), opposée au début de filet (22) le long de l'étendue du filet (21), et
des corps de coupe (26) sont prévus dans les évidements (31), lesquels corps de coupe étant formés d'un matériau dont la dureté est supérieure à la dureté du filet (21),
dans laquelle un corps de coupe (26) présente un axe longitudinal (27) et une surface extérieure (28) entourant l'axe longitudinal (27) à une certaine distance de celui-ci,
et dans laquelle chaque évidement (31) comporte une partie de support plate (34) pour recevoir dans certaines zones la surface extérieure du corps de coupe (26),
**caractérisée en ce que** la partie de support plate (34) est en forme de cuvette, les génératrices étant dirigées le long de l'étendue du filet (21).

2. Vis selon la revendication 1, **caractérisée en ce que** le corps de coupe (26) est en butée contre l'une des parois de délimitation (33, 34) de l'évidement (31).

3. Vis selon l'une quelconque des revendications 1 ou 2, **caractérisée en ce qu'**un espace libre (35) est prévu entre la partie de support (34) et l'une des parois de délimitation (33, 34) de l'évidement (31).

4. Vis selon l'une quelconque des revendications 1 à 3, **caractérisée en ce qu'**un chanfrein (36) est prévu au niveau de la transition entre l'une des parois de délimitation (33) de l'évidement (31) et le profil extérieur radial (23) du filet (21).

5. Vis selon l'une quelconque des revendications 1 à 4, **caractérisée en ce que** la partie de support (34) comporte un bord de butée latéral (37) dirigé vers la zone d'extrémité libre (15) de la tige (12), lequel bord de butée fait saillie à partir du côté de tige extérieur (14).

6. Vis selon l'une quelconque des revendications 1 à 5, **caractérisée en ce que** la partie de support (34) comporte un bord de butée latéral (38) opposé à la zone d'extrémité libre (15) de la tige (12), lequel bord de butée fait saillie à partir du côté de tige extérieur (14).

7. Vis selon les revendications 5 et 6, **caractérisée en ce que** la hauteur (C) du bord de butée latéral (37) dirigé vers la zone d'extrémité libre (15) de la tige (12), en partant du côté de tige extérieur (14), est plus grande que la hauteur correspondante (D) du bord de butée latéral (38) opposé à la zone d'extrémité libre (15) de la tige (12).
